# EUROPÄISCHE PATENTSCHRIFT

(11) **EP 1 704 951 B1**
(45) Veröffentlichungstag und Bekanntmachung des Hinweises auf die Patenterteilung: **12.05.2010**
(21) Anmeldenummer: 06004103.5
(22) Anmeldetag: 01.03.2006
(51) Int. Cl.: B23B 31/00

(54) **Hochdrehende Arbeitsspindel**
High speed spindle
Broche à grande vitesse

(30) Priorität: 23.03.2005 DE 202005004712 U
(43) Veröffentlichungstag der Anmeldung: 27.09.2006
(73) Patentinhaber: Homag Holzbearbeitungssysteme AG, 72296 Schopfloch (DE)
(72) Erfinder: Gauss, Achim, 72280 Domstetten/Hallwangen (DE); Sturm, Gotthilf, 72293 Glatten (DE)
(74) Vertreter: HOFFMANN EITLE

(56) Entgegenhaltungen:
- EP-A- 1 044 748
- EP-A- 1 344 599
- EP-A1- 0 291 048
- DE-A1- 19 848 371
- DE-U1- 8 430 433
- GB-A- 575 112
- US-A1- 2003 097 919

## Beschreibung

Die Erfindung betrifft eine Arbeitsspindel für hochdrehende Werkzeuge insbesondere bei Holzbearbeitungsmaschinen gemäß den Merkmalen des Oberbegriffs des Patentanspruchs 1. Ein solches Werkzeug ist beispielweise aus EPO 291 048 A1 bekannt.

Solche Arbeitsspindeln werden auch als HF-Spindeln bezeichnet, weil es sich in der Regel um sogenannte Motorspindeln handelt, deren Elektromotore mit hochfrequenten Strömen zur Erzeugung hochfrequenter Drehfelder gespeist werden. Wegen der auftretenden Fliehkräfte werden an die Funktionssicherheit der die Werkzeuge in der Werkzeugschnittstelle der Spindelwelle haltenden Werkzeugspannsätze hohe Anforderungen gestellt. Die Werkzeugspannsätze weisen radial verstellbare Spannklauen auf, die über Keilgetriebe betätigt werden, an denen erhebliche Reibung auftritt. Dazu ist man bestrebt, die Reibung an den Kontaktstellen der Keilgetriebe so gering wie möglich zu halten.

Deshalb besteht die Notwendigkeit, bei Arbeitsspindeln der in Rede stehenden Art, den Werkzeugspannsatz in regelmäßigen Abständen mit einem speziellen Schmierstoff zu versorgen. Hierzu muß das Spannsystem mit einem Spezialwerkzeug zerlegt, gereinigt und nach dem Einbringen des Schmierstoffs wieder montiert werden. Wegen der hohen Präzision des Werkzeugspannsatzes und der folglich geringen Toleranzen der Einstellmaße ist die Wartung der Antriebsspindeln sehr aufwendig und erfordert geschultes Fachpersonal.

Es gibt auch Arbeitsspindeln der genannten Art mit Werkzeugspannsätzen, die ohne Schmierstoffe auskommen. Hierbei werden die Reibpartner an den Kontaktstellen mit Beschichtungen versehen, die besonders hart sind. Zwar kann damit der Reibungskoeffizient deutlich reduziert werden, er ist allerdings bei dieser Trockenreibung immer noch erheblich höher als bei geschmierter Materialpaarung. Deshalb sieht man bei derartigen Spannsätzen doch wieder eine Dauerschmierung vor, womit sich die Schmierintervalle um ein Mehrfaches verlängern, trotzdem ist eine regelmäßige Nachschmierung erforderlich.

Bei allen bekannten Arbeitsspindeln mit den beschriebenen Werkzeugspannsätzen, die Bauteile mit Keilgetrieben und entsprechenden Reibflächen aufweisen, wird die Druckluft zum Ausblasen der Werkzeugschnittstelle beim Werkzeugwechsel außen um den Spannsatz herumgeleitet und tritt daher erst im Bereich der Werkzeugschnittstelle in die Werkzeugaufnahme ein. Dazu sind in die Werkzeugspindel achsparallele Kanäle eingearbeitet, die an die zur Druckluftführung mitbenutzte Bohrung, durch die die Zugstange zur Betätigung des Spannsatzes hindurchtritt, mittels radialer Zwischenkanäle anschließen und außen mit Abstand an dem Werkzeugspannsatz vorbeigeführt sind. So wird verhindert, daß der Schmierstoff, der in der Regel in Gestalt eines viskoseren Fettes verwendet wird, durch die Druckluft von den Reibpartnern der Bauteile des Spannsatzes weggeblasen wird. Zugleich versucht man damit zu verhindern, dass Verschmutzungen in den Bereich der mechanisch beweglichen Teile des Spannsatzes gelangen können. Dennoch wird oft festgestellt, dass Schmutzpartikel in den Spannsatz eindringen und eine Schwergängigkeit und Fehlfunktionen bedingen. Dies gilt vor allem für Ausführungen des Spannsatzes mit einem Niederhalter, der für die Spreizung der Spannklauen des Niederhalters vorgesehen wird. Bei nichtkorrekter Werkzeugspannung kann ein Sicherheitsproblem infolge ungenügender Fixierung des schnelldrehenden Werkzeugs auftreten, womit Beschädigungen und Gefährdungen einhergehen können.

Die EP 0 291 048 A1 offenbart eine Kupplungsvorrichtung zwischen einem Werkstück- oder Werkzeugträger, bei der Druckluft in einem engen Spalt zwischen Zugstange und Spindel geführt wird und eine getrennte Schmierung mit einem Schmiermittel erfolgt.

Der Erfindung liegt die Aufgabe zugrunde, eine Werkzeugspindel der eingangs genannten Art zu schaffen, bei der der Spannsatz bei jedem Ausblasen der Werkzeugschnittstelle mit Schmierstoff versorgt wird.

Diese Aufgabe wird bei einer Arbeitsspindel der genannten Art durch die kennzeichnenden Merkmale des Patentanspruchs 1 gelöst.

Für die Erfindung ist wesentlich, dass mit jeder Betätigung, also bei jedem Werkzeugwechsel, der Spannsatz über die durch seinen Aufnahmeraum hindurchgeführte Druckluft frischen Schmierstoff erhält, womit ein Transport des Schmierstoffs durch den Spannsatz hindurch bis zur Werkzeugschnittstelle hin stattfindet. Dadurch kann sich innerer Abrieb, der in dem Werkzeugspannsatz entsteht, nicht in störender Weise festsetzen, außerdem werden Verunreinigungen durch den periodischen Druckluftstrom nicht nur aus der Werkzeugschnittstelle sondern auch aus dem Werkzeugspannsatz ausgeblasen, womit sich für den Werkzeugspannsatz auch eine ständige Reinigung ergibt. Für eine ausreichende Schmierung des Spannsatzes sind nur geringe Mengen eines geeigneten Schmierstoffs erforderlich, die bei jedem Werkzeugwechsel in der Druckluft mitgeführt werden. Hierfür kommen Schmierstoffe in Gestalt von Aerosolen in Betracht.

Vorteilhafte Ausgestaltungsmerkmale der Erfindung ergeben sich aus den Unteransprüchen.

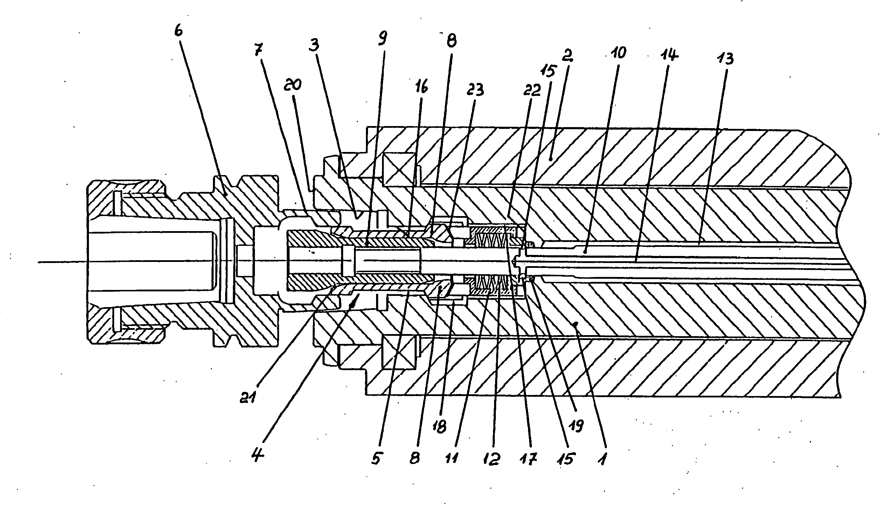

Die Erfindung wird nachfolgend anhand der Zeichnung an einem Ausführungsbeispiel noch näher erläutert. Die Zeichnung zeigt eine Arbeitsspindel für hochdrehende Werkzeuge im Längsschnitt.

Im einzelnen erkennt man in der Zeichnung eine Spindelwelle 1, die in einem rohrförmigen Gehäuse 2 gelagert ist. Die Spindelwelle 1 ist für hohe Drehzahlen ausgelegt, es handelt sich um eine sogenannte HF-(Hochfrequenz-)Spindel, die mit einem entsprechenden Elektromotor kombiniert ist. An dem vom Motor abgelegenen Ende ist die Spindelwelle 1 mit einer Werkzeugaufnahme versehen, die eine Werkzeugschnittstelle 3 in Form eines Hohlkegels aufweist. In die Werkzeugschnittstelle 3 ragt ein Werkzeugspannsatz 4 hinein, der in einem sich axial an die Werkzeugschnittstelle 3 anschließenden Aufnahmeraum 5 mit seinen rückwärtigen, von der Werkzeugschnittstelle 3 wegliegenden Bauteilen angeordnet ist. Von dem Aufnahmeraum für den Werkzeugspannsatz 4 ist die sogenannte Werkzeugaufnahme zu unterscheiden, die hier als Werkzeugschnittstelle 3 bezeichnet ist.

An der Werkzeugschnittstelle 3, dem Hohlkegel, wird ein rotierend arbeitendes Werkzeug 6 aufgenommen, welches einen der Werkzeugschnittstelle 3 entsprechenden Spannkegel 7 aufweist. Die axiale Fixierung des Werkzeugs 6 erfolgt durch Anschlag an einer stirnseitigen, planen Anlagefläche 20 der Spindelwelle 1.

Die Sicherung des an der Spindelwelle 1 gehaltenen Werkzeugs 6 erfolgt über den Werkzeugspannsatz 4. Dieser weist kippbare Spannklauen 8 auf, die entlang dem Umfang eines Spreizkörpers 9 verteilt angeordnet sind und die mit ihren äußeren Enden in ihrer Spreizlage in den hohl ausgebildeten Werkzeug-Spannkegel 7 eingreifen. Der Spreizkörper 9 ist in axialer Richtung der Spindelwelle 1 verschieblich, und die Spannklauen 8 sowie der Spreizkörper 9 weisen als Paar zusammenwirkende Konusflächen auf, über die bei Verschieben des Spreizkörpers 9 in Richtung von der Werkzeugschnittstelle 3 weg die Spreizung der Spannklauen 8 erfolgt. Diese keilartig zusammenwirkenden Konusflächen 21 stellen ein Keilgetriebe dar, bei dem die Kontaktflächen in reibenden Kontakt miteinander kommen.

Die Verschiebung des Spreizkörpers 9 wird über eine Zugstange 10 bewirkt, die durch den Aufnahmeraum 5 des Werkzeugspannsatzes 4 koaxial hindurchgeführt ist. In axialer Richtung hinter den Spannklauen 8 und dem Spreizkörper 9 umgibt die Zugstange 10 ein sogenannter Niederhalter 11, der über Federn 12 an einem Absatz 22 der Spindelwelle 1, der zugleich das Innenende des Aufnahmeraums 5 für den Spannsatz 4 bildet, abgestützt ist. An diesem Niederhalter 11 stützen sich wiederum die gespreizten Spannklauen 8 mit ihren rückwärtigen Enden über Konus- bzw. Keilflächen 23 ab, auch an diesen Flächen reiben die Spannklauen 8 und der Niederhalter 11 aneinander.

Die notwendige Schmierung der beschriebenen Reibpartner der Bauteile des Spannsatzes 4 erfolgt mit Hilfe von Druckluft, die in die Werkzeugaufnahme eingeleitet wird, um beim Werkzeugwechsel die Werkzeugschnittstelle 3 nach dem Freigeben des Spannkegels 7 an dem auszuwechselnden Werkzeug 6 auszublasen. Die Druckluft wird durch den den Werkzeugspannsatz 4 aufnehmenden Aufnahmeraum 5 hindurchgeleitet, die Einleitung der Druckluft in diesen Aufnahmeraum 5 erfolgt durch die Zugstange 10 hindurch, welche dazu mit einem koaxialen Luftführungskanal 14 versehen ist. Die Zugstange 10 ist durch eine Längsbohrung 13 koaxial durch die Spindelwelle 1 hindurchgeführt, alternativ oder zusätzlich kann die Druckluftführung auch durch diese Bohrung 13 der Spindelwelle 1 erfolgen. Da beim Ausführungsbeispiel die Druckluft durch den Luftführungskanal 14 in der Zugstange 1 in den Aufnahmeraum 5 für den Werkzeugspannsatz 4 eingeleitet wird, ist zwischen diesem Aufnahmeraum 5 und der Bohrung 13 der Spindelwelle 1 eine luftdicht abschließende Dichtung 19 vorgesehen.

Der Luftführungskanal 14 in der Zugstange 10 endet in axialer Höhe am rückwärtigen, inneren Ende des Niederhalters 11 des Werkzeugspannsatzes 4. An dieser Stelle queren eine oder mehrere radiale Bohrungen den Luftführungskanal 14, die mit umfangsseitig an der Zugstange 10 angeordneten Luftaustrittsöffnungen 15 verbunden sind. So ist sichergestellt, daß die Druckluft auf ganzer Länge durch den Aufnahmeraum 5 und teils durch den Werkzeugspannsatz 4 hindurchtritt und alle Bauteile des Werkzeugspannsatzes 4 bestreicht. Dies ist insoweit von Bedeutung, als mit der Druckluft ein Schmierstoff in Gestalt eines Aerosols mitgeführt wird, der vor allem die Aufgabe hat, die Reibpartner bzw. Reibflächen des gesamten Keilgetriebes zwischen dem Spreizkörper 9 und den Spannklauen 8 einerseits sowie zwischen dem Niederhalter 11 und den Spannklauen 8 andererseits zu benetzen. Darüber hinaus wird durch die Strömung der Druckluft an dem Werkzeugspannsatz 4 vorbei und durch diesen hindurch eine Reinigungswirkung erzielt, so daß über die Werkzeugschnittstelle 3 Verunreinigungen gar nicht erst in den den Werkzeugspannsatz 4 haltenden Aufnahmeraum 5 gelangen können.

Der Aufnahmeraum 5 hat Umfangswandungen 16, die einerseits eine sichere radiale Abstützung des Werkzeugspannsatzes 4 sicherstellen, andererseits auch um den Werkzeugspannsatz 4 herum die Führung der mit dem Schmierstoff beladenen Druckluft ermöglichen.

Dazu ist an geeigneten Stellen der Aufnahmeraum 5 in radialer Richtung erweitert, was in Gestalt von voneinander beabstandeten, miteinander verbundenen Ringspalten 17 vorgenommen sein kann, oder es sind rinnenförmige Luftleitkanäle 18 in die Umfangswandung 16 des Aufnahmeraums 5 eingeformt. Im letzteren Fall kann eine wendelförmige Anordnung der Luftleitungskanäle 18 vorgesehen sein, um darin die Druckluft mit einer axialen Wegkomponente vom Innenende des Aufnahmeraums 5 bis zur Werkzeugschnittstelle 3 leiten zu können.

## Patentansprüche

1. Arbeitsspindel für hochdrehende Werkzeuge von Holzbearbeitungsmaschinen mit einer Spindelwelle (1), die an ihrem einen Ende eine Werkzeugaufnahme mit einer Werkzeugschnittstelle (3) und einem hiervon in axialer Richtung sich fortsetzenden Werkzeugspannsatz (4) aufweist, der in einem zur Werkzeugschnittstelle (3) offenen Aufnahmeraum (5) angeordnet ist, in welchem zur Betätigung des Werkzeugspannsatzes (4) eine in einer koaxialen Bohrung (13) der Spindelwelle (1) angeordnete Zugstange (10) eingeführt ist, wobei durch die Zugstange (10) hindurch Druckluft in den Bereich der Werkzeugschnittstelle (3) der Werkzeugaufnahme zum Ausblasen der Werkzeugschnittstelle (3) einleitbar ist,
**dadurch gekennzeichnet,**
**dass** die Einleitung der Druckluft in den Aufnahmeraum (5) des Werkzeugspannsatzes (4) durch einen Luftführungskanal (14) der Zugstange (10) und mit diesem verbundenen, umfangsseitigen Luftaustrittsöffnungen (15) erfolgt, wobei die Luftaustrittsöffnungen (15) in axialer Höhe des von der Werkzeugschnittstelle (3) wegliegenden Endes des Werkzeugspannsatzes (4) angeordnet sind, und die Druckluft mit einem Schmierstoff angereichert ist.

2. Arbeitsspindel nach Anspruch 1
**dadurch gekennzeichnet,**
**dass** der Aufnahmeraum (5) zur Bohrung (13) der Spindelwelle (1) hin, durch die die Zugstange (10) hindurchgeführt ist, luftdicht abgedichtet ist.

3. Arbeitspindel nach Anspruch 1 oder 2,
**dadurch gekennzeichnet,**
**dass** der Aufnahmeraum (5) in Umfangsrichtung um den Werkzeugspannsatz (4) herum in radialer Richtung partiell erweitert ist.

4. Arbeitssspindel nach Anspruch 3,
**dadurch gekennzeichnet,**
**dass** zwischen dem Werkzeugspannsatz (4) und der Umfangswandung (16) des Aufnahmeraums (5) voneinander beabstandete, miteinander verbundene Ringspalte (17) vorgesehen sind.

5. Arbeitsspindel nach Anspruch 3 oder 4,
**dadurch gekennzeichnet,**
**dass** in die Umfangswandung (16) des Aufnahmeraums (5) für den Werkzeugspannsatz (4) rinnenförmige Luftleitungskanäle (18) eingeformt sind.

## Claims

1. Work spindle for high-speed tools of woodworking machines having a spindle shaft (1) which at one end has a tool holding fixture with a tool interface (3) and, continuing therefrom in the axial direction, a tool clamping set (4) arranged in a holding chamber (5) which opens towards the tool interface (3) and in which a pull rod (10) arranged in a coaxial bore (13) of the spindle shaft (1) is introduced for actuating the tool clamping set (4), wherein compressed air can be introduced through the pull rod (10) into the region of the tool interface (3) of the tool holding fixture for blowing the tool interface (3), **characterised in that** introduction of the compressed air into the holding chamber (5) of the tool clamping set (4) takes place through an air conduction channel (14) of the pull rod (10) and, connected thereto, peripheral air outlet openings (15), wherein the air outlet openings (15) are arranged at the axial height of the end of the tool clamping circuit (4) remote from the tool interface (3), and the compressed air is enriched with a lubricant.

2. Work spindle according to claim 1, **characterised in that** the holding chamber (5) is sealed off airtightly from the bore (13) of the spindle shaft (1) through which the pull rod (10) passes.

3. Work spindle according to claim 1 or 2, **characterised in that** in the circumferential direction round the tool clamping set (4) the holding chamber (5) is partially extended in the radial direction.

4. Work spindle according to claim 3, **characterised in that** between the tool clamping set (4) and the circumferential wall (16) of the holding chamber (5) are provided annular gaps (17) spaced apart from each other and connected to each other.

5. Work spindle according to claim 3 or 4, **characterised in that** groove-like air conduction channels (18) are formed in the circumferential wall (16) of the holding chamber (5) for the tool clamping set (4).

## Revendications

1. Broche de travail pour outils à grande vitesse de rotation de machines d'usinage du bois, avec un arbre de broche (1), présentant, à une de ses extrémités, un logement à outil avec une interface d'outil (3) et un ensemble de serrage d'outil (4), formant un prolongement en direction axiale à partir de celui-ci, disposé dans un espace de logement (5), ouvert vers l'interface à outil (3), dans lequel une barre de traction (10), disposée dans un perçage (13) coaxial de l'arbre de broche (1), pour l'actionnement de l'ensemble de serrage d'outil (4), est insérée, de l'air comprimé étant susceptible d'être introduit à travers la barre de traction (10), dans la zone de l'interface à outil (3) du logement à outil, pour soufflage de l'interface à outil (3),
**caractérisée en ce que**
l'introduction de l'air comprimé dans l'espace de logement (5) de l'ensemble de serrage d'outil (4) s'effectue à travers un canal de guidage d'air (14) de la barre de traction (10) et des ouvertures de sortie d'air (15) situées côté périphérie, reliées à celui-ci, les ouvertures de sortie d'air (15) étant disposées à hauteur axiale de l'extrémité, éloignée de l'interface à outil (3), de l'ensemble de serrage d'outil (4), et l'air comprimé étant enrichi avec un lubrifiant.

2. Broche de travail selon la revendication 1,
**caractérisée en ce que**
l'espace de logement (5) est isolé de manière étanche à l'air par rapport au perçage (13) de l'arbre de broche (1), à travers lequel la barre de traction (10) est guidée.

3. Broche de travail selon la revendication 1 ou 2,
**caractérisée en ce que**
l'espace de logement (5) est élargi partiellement en direction radiale, en direction périphérique autour de l'ensemble de serrage d'outil (4).

4. Broche de travail selon la revendication 3,
**caractérisée en ce que**
des intervalles annulaires (17) reliés ensemble, espacés les uns des autres, sont prévus entre l'ensemble de serrage d'outil (4) et la paroi périphérique (16) de l'espace de logement (5).

5. Broche de travail selon la revendication 3 ou 4,
**caractérisée en ce que**
des canaux de guidage d'air (18) en forme de goulottes sont formés dans la paroi périphérique (16) de l'espace de logement (5) pour l'ensemble de serrage d'outil (4).
